# EUROPÄISCHE PATENTANMELDUNG

(11) **EP 0 931 933 A2**
(43) Veröffentlichungstag der Anmeldung: **28.07.1999**
(21) Anmeldenummer: 99101096.8
(22) Anmeldetag: 26.01.1999
(51) Int. Cl.: F03D 3/06

(54) **Widerstands-Windkraftrotor**

(30) Priorität: 27.01.1998 DE 19802899
(71) Anmelder: Licht - und Kraftwerke GmbH Helmbrechts, 95233 Helmbrechts (DE)
(72) Erfinder: Käferstein, Helmut, 95233 Helmbrechts (DE)
(74) Vertreter: Lange, Heinke

(57) **Zusammenfassung**

Die Erfindung betrifft einen Widerstands-Windkraftrotor mit selbsttätiger Wirbelabsaugung, der mindestens zwei einen Windwiderstand bildende Platten besitzt, die abwechselnd in die Anströmrichtung des Windes gestellt werden, zeichnet sich dadurch aus, dass die Platten an den Rändern senkrecht zur Drehachse bordwandähnliche Profiteile und/oderparallel zu den bordwandähnlichen Profiteile spitz- oder rundwellige Erhöhungen besitzen, die die Platten nach beiden Seiten senkrecht überragen, so dass der anströmende Wind zwischen diesen bordwandähnlichen Profilteilen geführt wird.

## Beschreibung

Die Erfindung betrifft einen Widerstands-Windkraftrotor mit selbsttätiger Wirbelabsaugung, der mindestens zwei einen Windwiderstand bildende Platten besitzt, die abwechselnd senkrecht zur Anströmrichtung des Windes eingestellt sind.

In der Vergangenheit hat man immer wieder versucht, aus Windströmungen brauchbare Arbeitsleistungen zu gewinnen, indem man dem Wind Rotorkonstruktionen in den Weg stellte, die vom Wind um eine senkrechte oder waagerechte Achse gedreht werden und einen Generator antreiben.

Diese Rotorkonstruktionen waren dabei unterschiedlich ausgeführt. Am bekanntesten sind Flügelkonstruktionen, bei denen die Flügel so ausgebildet sind, dass sie eine möglichst große Drehwirkung auf die Achse besitzen.

Eine andere Konstruktion entsteht, wenn Platten breitflächig zwangsläufig gegen den Wind gestellt werden, so dass sie die Drehwirkung nicht wieder abbremsen. Es werden bei dieser Konstruktion mindestens zwei Platten so zwangsgesteuert, dass die eine Platte stets flach gegen den Wind läuft, wenn die andere Platte im Wind steht.

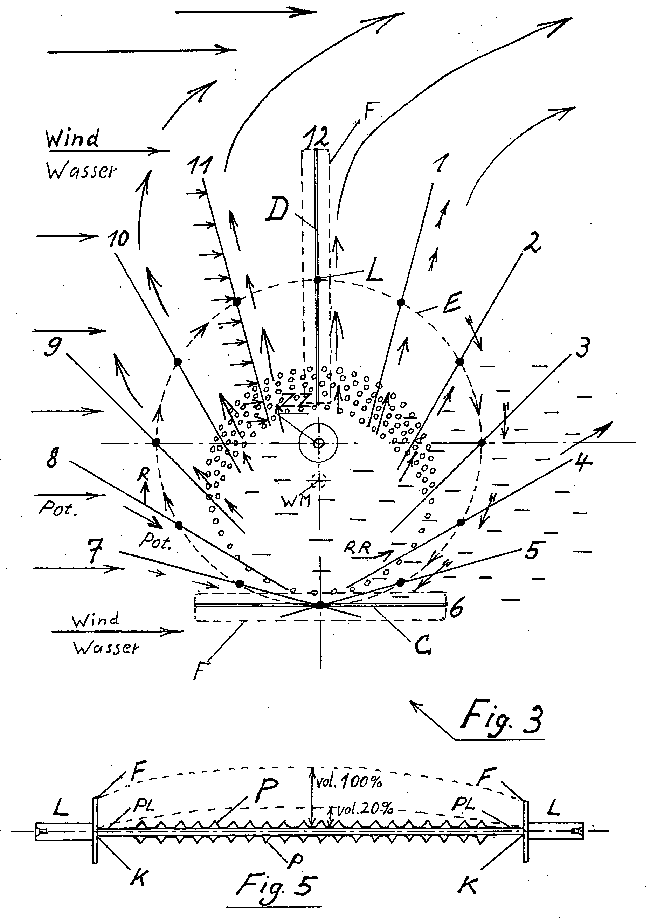

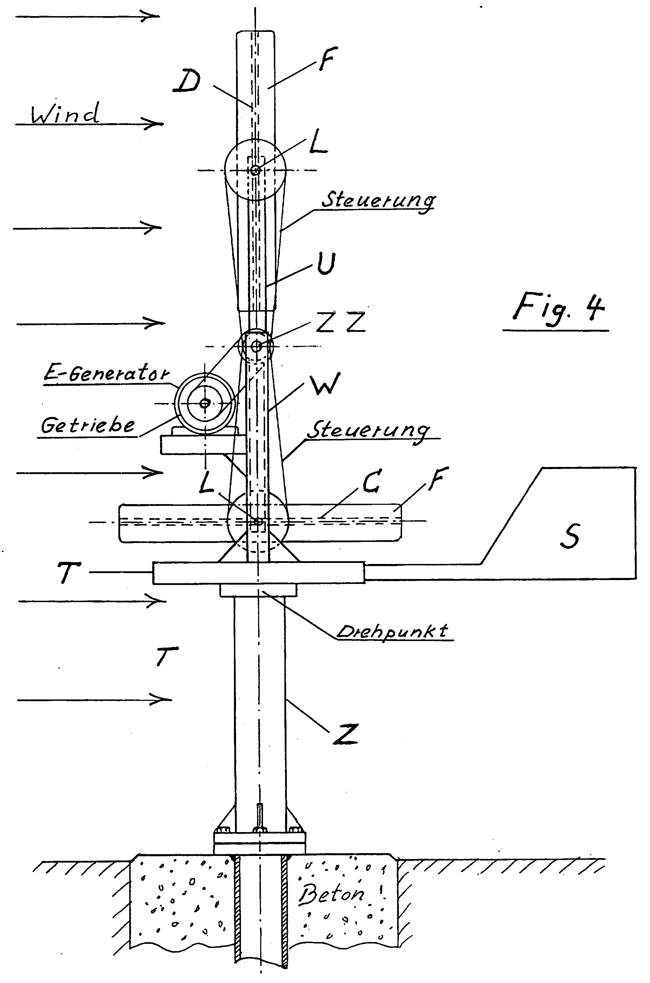

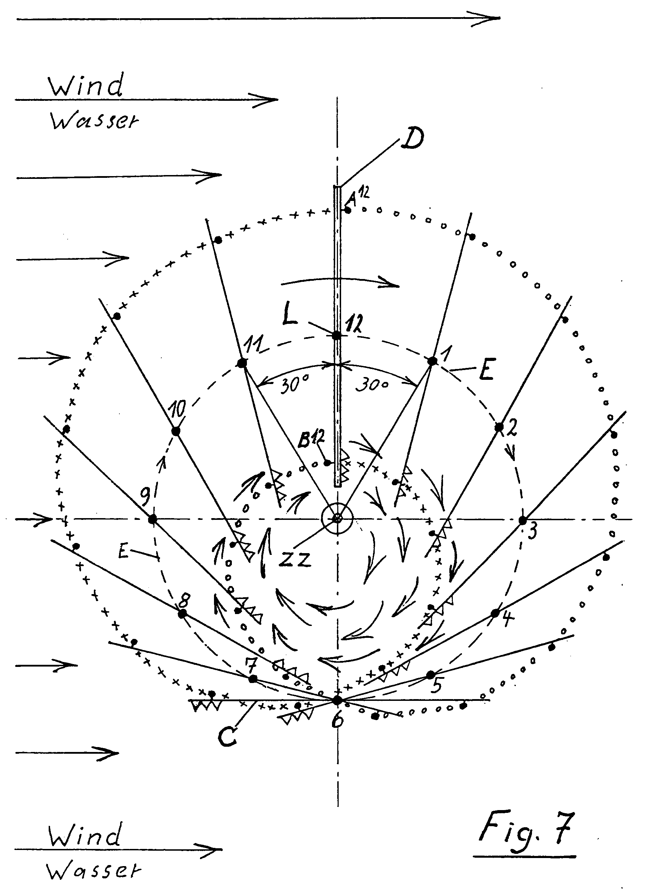

Der Aufbau und die Wirkungsweise eines Zweiplattengerätes wird in den Fign. 4 und 7 gezeigt. In Fig. 4 ist an einem Tragrohr Z ein Grundrahmen T drehbar angeordnet. Der Grundrahmen T mit zwei senkrechten Tragarmen W besitzt eine Windfahne S, die den Grundrahmen T und die Rotorachse ZZ senkrecht zur Anströmrichtung hält. Die Rotorachse ZZ ist in Lagern, die sich gegenüberliegend in den Tragarmen W befinden, abgestützt. Die Rotorachse ZZ trägt zwei kleinere Tragarme U, die sich genau gegenüber stehen. Ein Zweiplattengerät benötigt so vier Tragarme U. An den äußeren Enden der Tragarme U befinden sich Lager L, an denen sich jeweils die Drehachsen der Platten D und C abstützen.

In Fig. 7 wird die Wirkungsweise des in Fig. 4 dargestellten Zweiplattengerätes beschrieben. Der Schub an der oben senkrecht stehenden Platte D bewirkt, dass sich die Platte D an ihrer sich auf einer Kreisbahn bewegenden Drehachse im höchsten Punkt senkrecht stehend in Windrichtung bewegt, wobei die effektive Anströmfläche der Platte langsam kleiner wird bis sie den geringstmöglichen Windwiderstand bietet, wobei eine Drehbewegung der Achse ZZ entsteht. Die jetzt um 90° abgesenkte Platte wird wieder gegen Windrichtung in eine Ausgangslage bewegt, in der sie wieder beginnt, sich aufzurichten. Die zweite Platte beschreibt jeweils phasenverschoben die selben Bewegungen, so dass mindestens eine Platte jeweils mit ihrer Fläche in den Wind gestellt ist.

Bei Antrieb dieses Plattensystems durch den Wind (in der Zeichnung von links kommend) wird bereits nach einer Umdrehung der Achse ZZ im Zentrum des Plattersystems ein Wirbel aufgebaut, der zu extremen Leistungsverlusten führt. Die auf die Platten auftreffende Luftströmung wird bereits nach Stellung 12 mitgenommen und mit der leichten Drehung der Platte in den Wirbel geschoben. Diese Erscheinung wird von der seitlich an den Platten abströmenden Luftmassen unterstützt. Untersuchungen mit Rauch haben dieses bestätigt.

So überzeugend die Idee auf den ersten Blick erscheint, so gering war bisher der Erfolg dieser Systeme. Versuche in Windkanal mit senkrecht und schräg gestellten Platten brachten auch in den Folgejahren keinen besseren Erfolg. Ihr Wirkungsgrad lag bei etwa 15%. Dieses wird durch folgendes Dokument belegt: Felix v. König 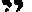 Wie baut man Windräder", Udo Pfriemer-Verlag München.

In eigenen Versuchen wurden Windräder mit 0,5 m² Anströmfläche bei extrem leichtgängig ausgeführten Lagern und Steuerelementen nur auf einen Wirkungsgrad von etwa 18% gebracht. Bei einem Sicherheitsfaktor von 10 sind die Kosten für eine solche Anlage wirtschaftlich nicht gerechtfertigt. Auch mit mehreren Platten ausgerüstete Windkraftwandler brachten bei gleichen oder größeren Baukosten keine nennenswerten Verbesserungen.

Ein modernes Dreiflügelgerät erzeugt an seinen profilierten 20 m 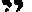 Latten" bei 1,256 m² angeströmter Rotorkreisfläche und einer Windgeschwindigkeit von 13m/s Wind 600 kW Nettoleistung. Wobei der Wind eine Anströmmasse (1,256 m² x 13 m/s x 1,29 kg/m³ = 21,063 kg pro Sek. besitzt, was einer kinetischen Leistung von 1,779 kW/s entspricht. Davon werden nur 750 kW Wellenleistung, also 42,16 % von den Flügeln entnommen. Jeder m² Anströmfläche bringt also 0,597 kW Wirlkleistung. Damit dürfte die Leistungsgrenze derartiger Konstruktionssysteme erreicht sein.

Der Anmelder hat gefunden, dass der geringe Wirkungsgrad in erster Linie auf Wirbel zurückzuführen ist, die innerhalb des Schwenkbereiches der widerstandsbildenden Platten des Rotors entstehen.

Die Aufgabe der Erfindung besteht deshalb darin, die Platten so zu gestalten, dass der Wirkungsgrad des Windkraftrotors erhöht wird Der Windkraftrotor soll dabei kostengünstig herstellbar sein.

Die Lösung der Aufgabe wird durch einen Widerstands-Windkraftrotor mit selbsttätiger Wirbelabsaugung, der mindestens zwei einen Windwiderstand bildende Platten besitzt, die abwechselnd in die Anströmrichtung des Windes gestellt werden, dadurch gelöst, dass die Platten an den Rändern senkrecht zur Drehachse bordwandähnliche Profiteile besitzen, die die Platten nach beiden Seiten senkrecht überragen, so dass der anströmende Wind zwischen diesen bordwandähnlichen Profilteilen geführt wird.

Der Widerstands-Windkraftrotor kann auch so aufgebaut sein, dass zwischen den bordwandähnlichen Profilteilen mindestens eine weitere rippenartige Wand auf beiden Seiten der Platte vorhanden ist. Damit wird die Gesamtfläche der Platte weiter unterteilt.

Bei einem weiteren erfindungsgemäßen Widerstands-Windkraftrotor befinden sich auf beiden Seiten der Platten zwischen den bordwandähnlichen Profilteilen spitz- oder rundwellige Erhöhungen, die parallel zu den bordwandähnlichen Profilteilen verlaufen.

Der entscheidende Vorteil der Erfindung tritt dadurch ein, dass der anströmende Wind geführt wird und dadurch wirbelfrei auf den Platten strömt. Es können sich keine Wirbel bilden, die bei den unbegrenzten Rändern der Platten unvermeidlich sind. Die Konstruktion ist so effektiv, dass der Windrotor in wesentlich geringeren Höhen als die bekannten Windkraftwerke mit Flügeln errichtet werden kann. Die Konstruktion ist außerdem raumsparend und besitzt auch aus diesem Grund wesentlich geringere Herstellungskosten.

Versuche haben gezeigt, dass beim Betrieb des Widerstands-Windkraftrotors kaum hörbare Geräusche vorhanden sind. Selbst ein Gerät neben einem Wohnhaus würde auf diese Weise nicht stören.

Die Wirkungsweise des Widerstands-Windkraftrotors entspricht der bereits im Stand der Technik beschriebenen. Die Steuerung der Platten ist so eingestellt, dass jeweils mindestens eine Platte dem Wind ihre Fläche entgegen stellt und die andere Platte phasenverschoben zu dieser arbeitet.

Es ist durchaus möglich, statt Wind auch Wasser als Antriebsmittel zu verwenden.

Die Erfindung soll anhand von Ausführungsbeispielen näher erläutert werden.
Fig. 1 zeigt eine Platte PL gemäß vorliegender Erfindung, die an den senkrecht zur Drehachse L verlaufenden Rändern bordwandähnliche Profiteile besitzt, die die Platte nach beiden Seiten senkrecht überragen;
Fig. 2 zeigt ein weiteres Ausführungsbeispiel der Platte, bei der zwischen den bordwandähnlichen Profilteilen eine weitere rippenartige Wand auf beiden Seiten der Platte vorhanden ist;
Fig. 3 zeigt die Strömungsverhältnisse an einem Widerstands-Windkraftrotor entsprechend vorliegender Erfindung;
Fig. 4 zeigt einen Widerstands-Windkraftrotor nach dem Stand der Technik;
Fig. 5 Zeigt ein weiteres Ausführungsbeispiel der Platte, bei der auf beiden Seiten zwischen den bordwandähnlichen Profilteilen spitz- oder rundwellige Erhöhungen vorhanden sind, die parallel zu den bordwandähnlichen Profilteilen verlaufen;
Fig. 6 zeigt den Verlauf der Nennleistung dem Generator zugeführten Wellenleistung eines Zweiplattengerätes entsprechend vorliegender Erfindung mit einer Plattenfläche von 0,5 m² bei Windgeschwindigkeiten von 3-13 m/s;
Fig. 7 zeigt die Strömungsverhältnisse an einem Widerstands-Windkraftrotor entsprechend dem Stand der Technik; und
Fig. 8 zeigt ein Ausführungsbeispiel des Widerstands-Windkraftrotors in einem Wasserkanal.

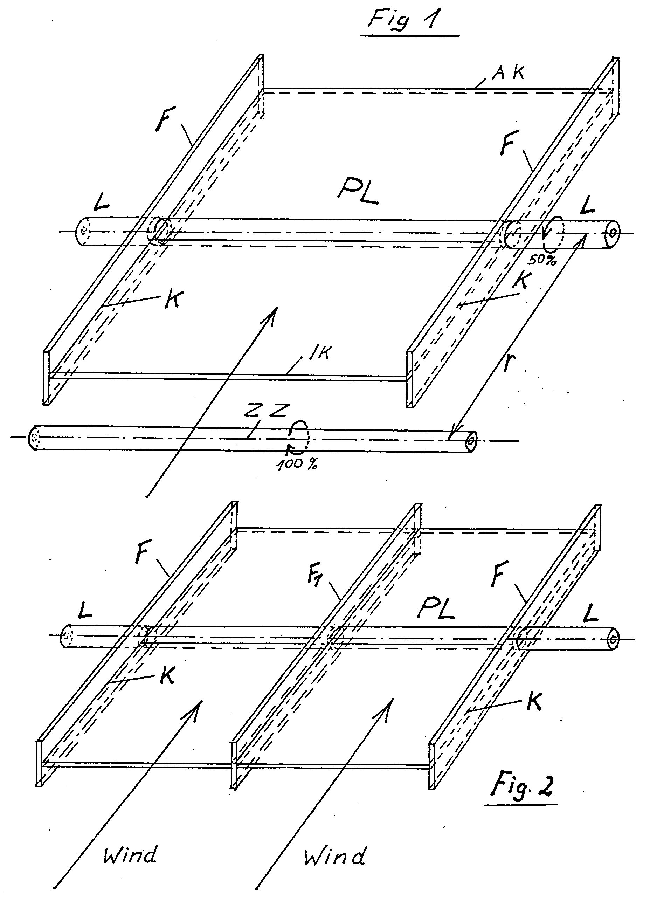

Die Fign. 1 und 2 zeigen Platten PL gemäß vorliegender Erfindung. In Fig. 1 wird eine Platte PL gezeigt, die an den senkrecht zur Drehachse L verlaufenden Rändern bordwandähnliche Profilteile F besitzt, die die Platte nach beiden Seiten senkrecht überragen. In Fig. 2 wird eine Platte gezeigt, bei der zwischen den bordwandähnlichen Profilteilen eine weitere rippenartige Wand auf beiden Seiten der Platte vorhanden ist. Die Steuerung ist bei einem Zweiplattengerät so eingestellt, dass sich die Drehachse L der Platte PL mit der halben Geschwindigkeit der für beide Platten PL gemeinsamen Drehachse ZZ bewegt, die den Generator antreibt. Der Wind wird zwischen den bordwandähnlichen Profilteilen so geführt, dass keine Wirbel entstehen, was zu einem wesentlich besseren Wirkungsgrad führt.

Fig. 3 zeigt die Strömungsverhältnisse an einem Widerstands-Windkraftrotor entsprechend vorliegender Erfindung, wie sie in den Fign. 1, 2 und 5 dargestellt sind. Durch die erfinderische Konstruktion der Platten PL wird der Luftstrom nicht mehr verwirbelt und nach beiden Seiten der Platten PL abgedrängt, sondern er wird auf der Platte PL nach oben geführt, so dass stets eine Komponente der Windkraft weiter auf die Platten PL wirkt. Sobald sich die Platte PL wieder in den Wind dreht, beginnt der in der Zeichnung von links kommende Wind sich unter der auf der Kreisbahn E aufwärts steigenden Platte PL zu teilen, wobei eine Komponente tangential zur Kreisbahn E wirkt und die Platte PL zusätzlich antreibt. Da auf der der Strömung abgewandten Seite der Platte PL ein Unterdruck entsteht, wird diese Wirkung verstärkt. Diese Wirkungen treten bei dem Widerstands-Windkraftrotor entsprechend dem Stand der Technik, wie er in Fig. 7 erläutert wurde, nicht auf. In den sich bildenden Sog werden alle Luftteilchen einbezogen und es entsteht ein gerichteter Luftstrom ohne irgendeine Stauwirkung und damit ohne Wirbel. Alternativ kann auch Wasser anstelle von Wind als Antriebskraft genutzt werden

Fig. 5 Zeigt ein weiteres Ausführungsbeispiel der Platte PL entsprechend der vorliegende Erfindung, bei der auf beiden Seiten zwischen den bordwandähnlichen Profilteilen F spitz- oder rundwellige Erhöhungen P vorhanden sind, die parallel zu den bordwandähnlichen Profilteilen F verlaufen. Versuche zeigte, dass sich beim Fehlen der bordwandähnlichen Profilteilen F nur Luftströmungen von etwa 20% halten konnte, die keine Sogwirkung erzeugten. Erst nachdem diese mit den Erhöhungen versehenen Platte PL auch mit bordwandähnlichen Profilteilen versehen wurde, vergrößerte sich die Luftsrömungen auf das 5-fache mit einer entsprechenden Sogwirkung, da die Luft eine Zentrifugalwirkung erfährt. Die Wirbelmassen aus dem Zentrum der Plattenanordnung werden abgesaugt und der frischen Anströmung wird dadurch nicht mehr der Weg versperrt. Die auf diese Weise nach außen transportierte Luft wird dann wieder von der Windströmung aufgenommen. Untersuchungen mit Rauch haben dieses bestätigt.

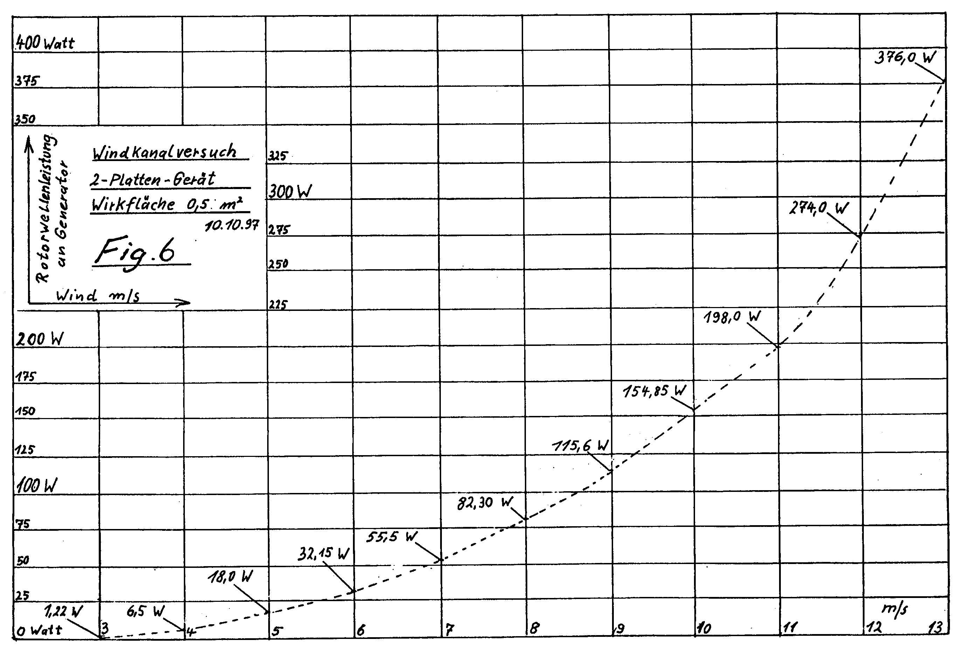

Fig. 6 zeigt den Verlauf der Nennleistung am Generator in Abhängigkeit von der Windgeschwindigkeit eines Zweiplattengerätes entsprechend vorliegender Erfindung mit einer Plattenfläche von 0,5 m². Diese Messungen wurden im Windkanal erzeugt. Es ist die an seiner Abtriebswelle bereitgestellte Wellenleistung.

Die Berechnung ergibt folgende Bilanz:
Auf der Anströmfläche von 0,5 m² des Ausführungsbeispiels entsprechend der vorliegenden Erfindung und einer Windgeschwindigkeit von 13 m/s ergibt sich eine Luftmenge von 6,5 m³ mit einer Masse von 8,38 kg und einer Leistung von 708 Watt. Daraus hat der Wandler eine Wellenleistung von 376 Watt erzeugt, was einem Wirkungsgrad von 53,10 % entspricht. Dabei ergeben sich Abmessungen, die wesentlich geringer sind, als bei den vergleichbaren Systemen mit z.B. Flügeln.

Bei einem Antrieb mit Wasser, das ca. 800 mal dichter als Luft ist, wird für dasselbe Ergebnis eine Anströmgeschwindigkeit von etwa 1,42 m/s benötigt.

Die Bilanz ergibt sich wie folgt:
Wasser mit einer Anströmgeschwindigkeit von 1,42 m/s bedeutet, dass etwa 710 l/s gegen die Platte PL mit 05, m² gedrückt wird. Das bedeutet eine Leistung von 715 Watt. Dabei wird bei gleichem Wirkungsgrad eine Wellenleistung von 390 Watt am Generator erzeugt.

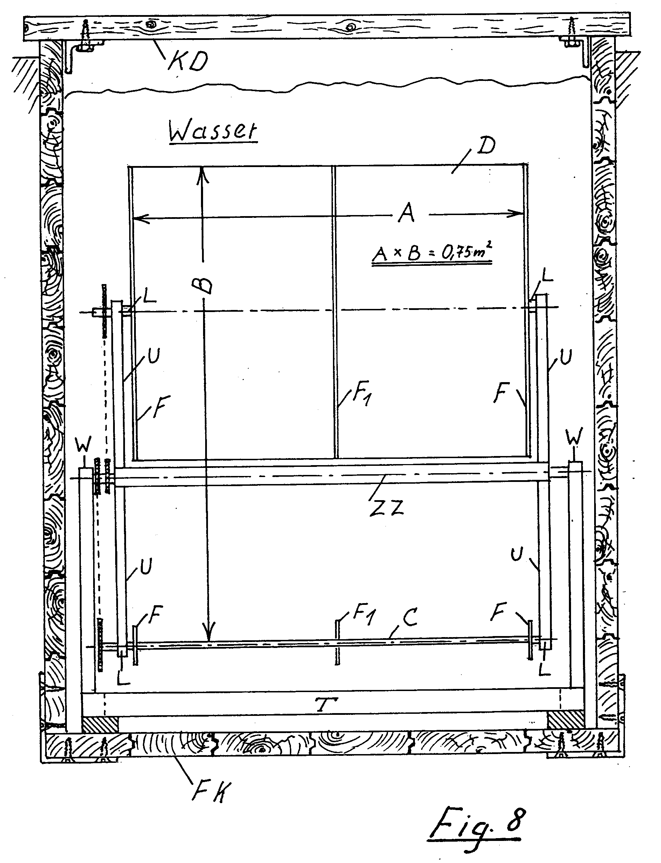

Fig. 8 zeigt ein Ausführungsbeispiel des Widerstands-Windkraftrotors in einem Wasserkanal. Die Platten D und C sind jeweils auf eine Achse L gelagert. Die Antriebswelle für den Generator ist mit ZZ bezeichnet. Zusätzlich zu den bordwandähnlichen Profilteilen F ist eine weitere rippenartige Wand F₁ vorhanden, die ebenfalls beide Seiten der Platten D und C übetragt.

## Patentansprüche

1. Widerstands-Windkraftrotor mit selbsttätiger Wirbelabsaugung, der mindestens zwei einen Windwiderstand bildende Platten besitzt, die abwechselnd in die Anströmrichtung des Windes gestellt sind, dadurch gekennzeichnet, dass die Platten an den Rändern senkrecht zur Drehachse bordwandähnliche Profiteile besitzen, die die Platten nach beiden Seiten senkrecht überragen, so dass der anströmende Wind zwischen diesen bordwandähnlichen Profilteilen geführt wird.

2. Widerstands-Windkraftrotor nach Anspruch 1, dadurch gekennzeichnet, dass zwischen den bordwandähnlichen Profilteilen mindestens eine weitere rippenartige Wand auf beiden Seiten der Platte vorhanden ist.

3. Widerstands-Windkraftrotor nach Anspruch 1, dadurch gekennzeichnet, dass auf beiden Seiten der Platte zwischen den bordwandähnlichen Profilteilen spitz- oder rundwellige Erhöhungen vorhanden sind, die parallel zu den bordwandähnlichen Profilteilen verlaufen.
